# EUROPEAN PATENT APPLICATION

(11) **EP 3 674 832 A1**
(43) Date of publication of application: **01.07.2020**
(21) Application number: 19754369.7
(22) Date of filing: 17.01.2019
(51) Int. Cl.: G05D 1/08

(54) **FLIGHT ATTITUDE CONTROL METHOD AND APPARATUS, AND FLIGHT CONTROL SYSTEM**

(30) Priority: 13.02.2018 CN 201810150910
(71) Applicant: Guangzhou Xaircraft Technology Co., Ltd, Tianhe District Guangzhou, Guangdong 510000 (CN)
(72) Inventor: WU, Bin, Guangzhou, Guangdong 510000 (CN)
(74) Representative: Novagraaf Technologies
(86) International application number: PCT/CN2019/072099
(87) International publication number: WO 2019/157900

(57) **Abstract**

A method for controlling flight attitude and apparatus, and a flight control system are provided. The method for controlling flight attitude includes: adjusting initial flight attitude information to obtain dynamically changing flight attitude information (S120); and obtaining flight attitude control information according to the dynamically changing flight attitude information (S130), wherein the flight attitude control information is used for controlling a flight attitude of an aircraft to change dynamically so as to change an air flow in an area below the aircraft.

## Description

### Technical Field

The present disclosure relates to the technical field of plant protection, and more particularly, to a method and apparatus for controlling flight attitude and a flight control system.

### Background

In modern agriculture, the use of unmanned aerial vehicles to control plant diseases and insect pests is a relatively common plant protection operation mode, which can not only save manpower costs, but also improve plant protection operation efficiency. At present, unmanned aerial vehicles mainly use parallel line progressive scanning spraying to fly in a plant protection area and spray plant protection agents on crops, thereby achieving plant protection operations on crops.

However, when using an unmanned aerial vehicle for plant protection operations, the unmanned aerial vehicle needs to spray plant protection agents while a fuselage remains stable. When the fuselage is stable, a downwind field of the unmanned aerial vehicle is also in a stable state. The generated air flow has been blowing on a plant surface, which makes it difficult for the plant protection agent to be sprayed on the surface of the crop facing away from an aircraft, so that some pests and diseases existing on the surface of the crop facing away from the aircraft cannot be controlled, thereby reducing the plant protection operation effect of the unmanned aerial vehicle. Not only that, because the unmanned aerial vehicle needs to spray the plant protection agent while the fuselage is kept stable, the plant protection operation of the unmanned aerial vehicle takes a long time.

### Summary

The objective of the embodiments of the present disclosure is to provide a method for controlling flight attitude and apparatus, and a flight control system, so as to improve a plant protection operation effect and shorten a plant protection operation time.

In order to achieve the foregoing objective, the embodiments of the present disclosure provide the following technical solutions.

In a first aspect, an embodiment of the present disclosure provides a method for controlling flight attitude. The method for controlling flight attitude may include the following steps.

Initial flight attitude information is adjusted to obtain dynamically changing flight attitude information.

Flight attitude control information is obtained according to the dynamically changing flight attitude information, the flight attitude control information being used for controlling a flight attitude of an aircraft to change dynamically so as to change an air flow in an area below the aircraft.

Compared with the conventional art, in the method for controlling flight attitude provided by the first aspect of the embodiment of the present disclosure, initial flight attitude information is adjusted to obtain dynamically changing flight attitude information. Therefore, during the plant protection operation, according to the dynamically changing flight attitude information, the obtained flight attitude control information can dynamically control a flight attitude of an aircraft, so that the flight attitude of the aircraft changes dynamically. According to the flight attitude control information, a propeller or rotor of the aircraft can disturb an air flow in an area below the aircraft, so that the disturbed air flow drives a plant protection agent sprayed by the aircraft to be dispersed in all directions, thereby ensuring that the agent sprayed by the aircraft can be attached to various positions of a crop, which solves the problem that it is difficult for the plant protection agent to be sprayed onto the surface of the crop facing away from the aircraft. Therefore, compared with the conventional art, the method for controlling flight attitude provided by the first aspect of the embodiment of the present disclosure can improve the plant protection operation effect.

Not only that, in the method for controlling flight attitude provided by the first aspect of the embodiment of the present disclosure, when the aircraft is in plant protection operation, it is only necessary to ensure that the flight attitude is in a dynamic change to disturb the air flow in the area below the aircraft, so that air convection in the area sprayed with the plant protection agent can ensure that the plant protection agent is sprayed on the surface of the crop facing away from the aircraft, thereby reducing or even avoiding hovering at a fixed position to achieve the purpose of improving the crop protection effect. Therefore, compared with the conventional art, the method for controlling flight attitude provided by the first aspect of the embodiment of the present disclosure can improve the plant protection operation effect and shorten the plant protection operation time to improve the plant protection operation efficiency.

In a second aspect, an embodiment of the present disclosure provides a method for controlling flight attitude. The method for controlling flight attitude may include the following steps.

Flight attitude control information is received.

According to the flight attitude control information, a flight attitude of an aircraft is controlled to be dynamically changing so as to change an air flow in an area below the aircraft.

Compared with the conventional art, the beneficial effects of the method for controlling flight attitude provided by the second aspect of the embodiment of the present disclosure are the same as those of the method for controlling flight attitude provided by the first aspect, and will not be described herein.

In a third aspect, an embodiment of the present disclosure provides a flight attitude control apparatus. The flight attitude control apparatus may include:
an attitude adjustment component, configured to adjust initial flight attitude information to obtain dynamically changing flight attitude information; and
an information control component connected to the attitude adjustment component, configured to obtain flight attitude control information according to the dynamically changing flight attitude information, the flight attitude control information being used for controlling a flight attitude of an aircraft to change dynamically so as to change an air flow in an area below the aircraft.

Compared with the conventional art, the beneficial effects of the flight attitude control apparatus provided by the third aspect of the embodiment of the present disclosure are the same as those of the method for controlling flight attitude provided by the first aspect, and will not be described herein.

In a fourth aspect, an embodiment of the present disclosure provides a flight attitude control apparatus. The flight attitude control apparatus may include:
a second transceiver component, configured to receive a flight control instruction; and
a driving control component connected to the second transceiver component, configured to control, according to the flight attitude control information, a flight attitude of an aircraft to be dynamically changing so as to change an air flow in an area below the aircraft.

Compared with the conventional art, the beneficial effects of the flight attitude control apparatus provided by the fourth aspect of the embodiment of the present disclosure are the same as those of the method for controlling flight attitude provided by the first aspect, and will not be described herein.

In a fifth aspect, an embodiment of the present disclosure provides a flight control system. The flight control system may include the flight attitude control apparatus in the first aspect, the flight attitude control apparatus in the second aspect and a driving component. The driving component and an information control component may be connected to a second transceiver component respectively.

Compared with the conventional art, the beneficial effects of the flight control system provided by the fifth aspect of the embodiment of the present disclosure are the same as those of the method for controlling flight attitude provided by the first aspect, and will not be described herein.

### Brief Description of the Drawings

The accompanying drawings described herein are used to provide a further understanding of the present disclosure and constitute a part of the present disclosure, and the exemplary embodiments of the present disclosure and the description thereof are used to explain the present disclosure, but do not constitute improper limitations to the present disclosure. In the drawings:
Fig. 1 is an application scenario diagram of a method for controlling flight attitude and apparatus according to an embodiment of the present disclosure;
Fig. 2 is a flowchart 1 of a method for controlling flight attitude according to Embodiment 1 of the present disclosure;
Fig. 3 is a flowchart of adjusting flight attitude information according to Embodiment 1 of the present disclosure;
Fig. 4 is a flowchart 2 of a method for controlling flight attitude according to Embodiment 1 of the present disclosure;
Fig. 5 is a flowchart 1 of a method for controlling flight attitude according to Embodiment 2 of the present disclosure;
Fig. 6 is a flowchart 2 of a method for controlling flight attitude according to Embodiment 2 of the present disclosure;
Fig. 7 is a structural block diagram 1 of a flight attitude control apparatus according to Embodiment 3 of the present disclosure;
Fig. 8 is a structural block diagram of an attitude adjustment component according to Embodiment 3 of the present disclosure;
Fig. 9 is a structural block diagram 2 of a flight attitude control apparatus according to Embodiment 3 of the present disclosure;
Fig. 10 is a structural block diagram of a flight attitude control apparatus according to Embodiment 4 of the present disclosure;
Fig. 11 is a structural block diagram of a flight control system according to an embodiment of the present disclosure; and

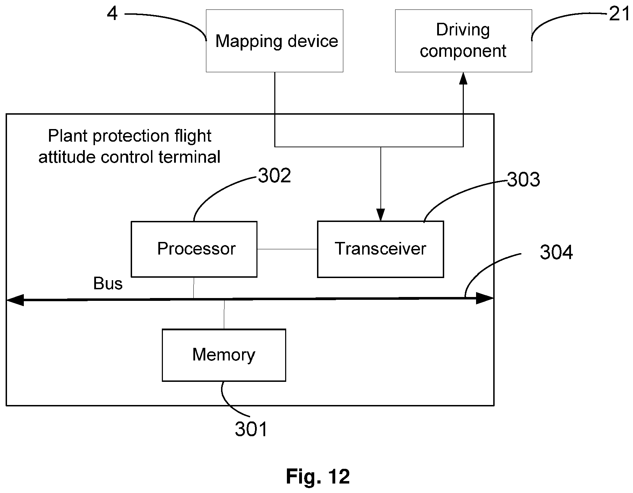

Fig. 12 is a hardware diagram of a plant protection flight attitude control terminal according to an embodiment of the present disclosure.

### Description of the reference signs:

1, client; 2, aircraft;
20, flight attitude control apparatus; 201, attitude adjustment component;
201a, initial information setting unit; 201b, angle control unit;
201c, attitude correction unit; 202, information control component;
203, first transceiver component; 204, second transceiver component;
205, driving control component; 21, driving component;
301, memory; 302, processor;
303, transceiver; 304, bus;
4, mapping device.

### Detailed Description of the Embodiments

The technical solutions in the embodiments of the present disclosure will be clearly and completely described below with reference to the drawings in the embodiments of the present disclosure. It is apparent that the described embodiments are only a part of the embodiments of the present disclosure, not all of the embodiments. On the basis of the embodiments of the present disclosure, all other embodiments obtained on the premise of no creative work of those of ordinary skill in the art fall within the scope of protection of the present disclosure.

Aiming at the problems of low plant protection efficiency and poor plant protection effect caused by unmanned aerial vehicles during a plant protection operation in the conventional art, the method for controlling flight attitude and apparatus provided by the embodiments of the present disclosure can control a flight attitude dynamic change of an aircraft during the plant protection operation, so that the aircraft is in a state similar to swinging back and forth or left and right when performing the plant protection operation, so as to improve the plant protection effect and the plant protection efficiency of the aircraft.

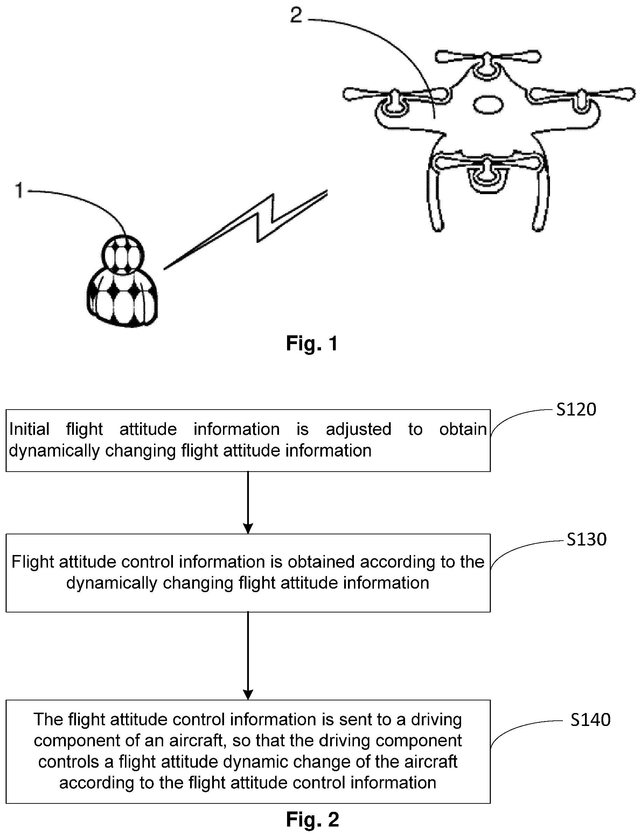

Fig. 1 illustrates an application environment diagram of a method for controlling flight attitude, which includes a client 1 and an aircraft 2 communicating with the client 1. The client 1 and the aircraft 2 may communicate wirelessly or by wire. The client 1 receives a plant protection task or other control information proposed by a user, such as route and speed control information, and transmits it to the aircraft 2. The aircraft 2 uses a flight attitude control apparatus 20 therein to complete the plant protection task according to the method for controlling flight attitude provided by the embodiment of the present disclosure. The client 1 may be a device such as a mobile phone, a desktop computer, a tablet computer or a smart handle, and the aircraft 2 may be an unmanned aerial vehicle or other aircrafts with a flight plant protection function. The method for controlling flight attitude and apparatus according to an embodiment of the present disclosure will be described in detail below with reference to Fig. 2 to Fig. 6.

### Embodiment 1

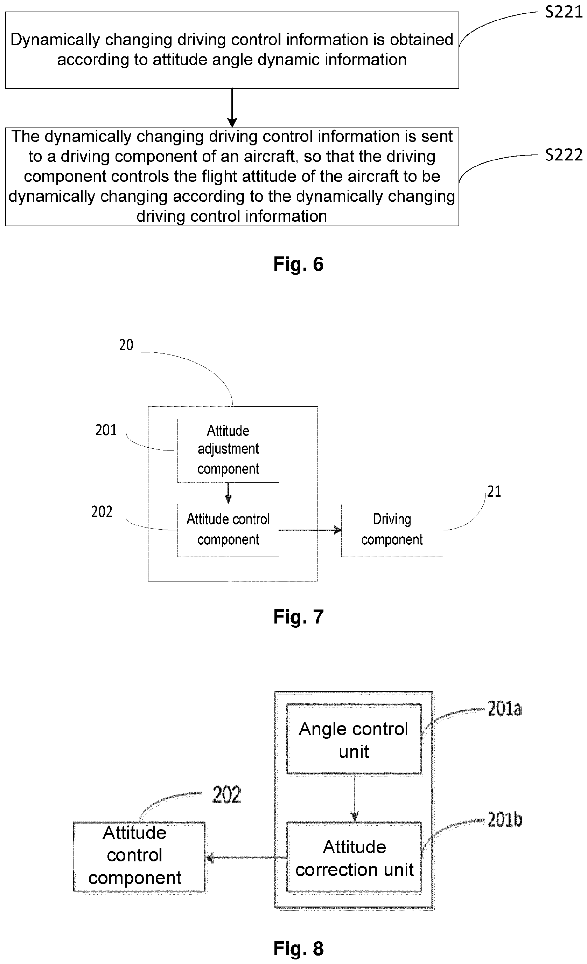

As shown in Fig. 2 and Fig. 7, the embodiment of the present disclosure provides a method for controlling flight attitude for controlling a driving component 21 (such as a motor) of an aircraft to drive a propeller or a rotor to rotor, so that the aircraft is in a swinging state when performing a plant protection operation. The method specifically includes the following steps.

In step S120, initial flight attitude information is adjusted to obtain dynamically changing flight attitude information. The initial flight attitude information may indicate an initial flight attitude of the aircraft. For example, the initial flight attitude information of the aircraft is 5m/s for stable flight. The flight attitude information includes a flight attitude signal that controls the flight of the aircraft. The adjustment mode may include: superimposing one or more attitude control signals on an original flight attitude signal to generate a superimposed dynamically changing flight attitude signal. The adjustment mode may also include: directly changing the original flight attitude signal to generate a dynamically changing flight attitude signal. The flight attitude information includes the flight attitude signal. The dynamically changing flight attitude information is defined as the flight attitude information adjusted on the basis of the original flight attitude information. The dynamically changing information may be wave-like flight attitude information or may be swinging flight attitude information, may be serpentine flight attitude information, may be jumping flight attitude information, or may be an irregular change or a periodic change, which are selected according to actual needs. For example, when the dynamically changing information is wave-like flight attitude information, the controlled aircraft may fluctuate up and down on the original flight route to form a wave-like flight trajectory, so that the dynamically changing down wind field generated by the rotor turns up the back of a blade, which is conducive to the attachment of a liquid medicine to the back of the blade.

In step S130, flight attitude control information is obtained according to the dynamically changing flight attitude information, the flight attitude control information being used for controlling a flight attitude of an aircraft to change dynamically so as to change an air flow in an area below the aircraft. Specifically, the flight attitude control information may be obtained according to the flight attitude information. Specifically, attitude control signals of the unmanned aerial vehicle at various attitude angles may be obtained according to the flight attitude information. Specifically, a preset comparison table between the flight attitude information and the flight attitude control information may be adopted for implementation. A flight attitude control signal may also be generated by quantizing the flying attitude information.

It can be understood that after the flight attitude control information is obtained, the method for controlling flight attitude provided by the embodiment of the present disclosure further includes the following steps.

In step S140, the flight attitude control information is sent to a driving component 21 of the aircraft. The driving component 21 may include a flight control center and a power device. The power device may include a motor, an ESC, a propeller. The driving component 21 controls a flight attitude dynamic change of the aircraft according to the flight attitude control information.

It can be seen from the above that in the method for controlling flight attitude provided by the embodiment of the present disclosure, initial flight attitude information is adjusted to obtain dynamically changing flight attitude information. Therefore, during the plant protection operation, according to the dynamically changing flight attitude information, the obtained flight attitude control information can dynamically control a flight attitude of an aircraft, so that the flight attitude of the aircraft changes dynamically. A propeller or rotor of the aircraft can disturb an air flow in an area below the aircraft, so that the disturbed air flow drives a plant protection agent sprayed by the aircraft to be dispersed in all directions, thereby ensuring that the agent sprayed by the aircraft can be attached to various positions of a crop, which solves the problem that it is difficult for the plant protection agent to be sprayed onto the surface of the crop facing away from the aircraft. Therefore, compared with the conventional art, the method for controlling flight attitude provided by the embodiment of the present disclosure can improve the plant protection operation effect.

Not only that, in the method for controlling flight attitude provided by the embodiment of the present disclosure, when the aircraft is in plant protection operation, it is only necessary to ensure that the flight attitude is in a dynamic change to disturb an air flow in an area sprayed by a plant protection agent, so that air convection in the area sprayed with the plant protection agent can ensure that the plant protection agent is sprayed on the surface of the crop facing away from the aircraft, thereby reducing or even avoiding hovering to spray at a fixed point when spraying crops such as fruit trees to achieve the purpose of improving the crop protection effect. Therefore, compared with the conventional art, the method for controlling flight attitude provided by the embodiment of the present disclosure can improve the plant protection operation effect and shorten the plant protection operation time to improve the plant protection operation efficiency.

It is to be noted that, in the embodiment of the present disclosure, the dynamically changing flight attitude information may be randomly changing or dynamically changing periodically during the dynamic change. When the flight attitude information changes regularly, the way in which the propeller of the aircraft disturbs the air flow can be controlled, so that the controllable disturbance air flow can periodically drive the plant protection agent to spray in one direction, so as to achieve that the plant protection agent sprayed by the aircraft can be controllably attached to a part where plant protection is needed, thereby making the plant protection part controllable.

It can be understood that the initial flight attitude information generally includes information such as speed and position, which may be controlled by the attitude angle.

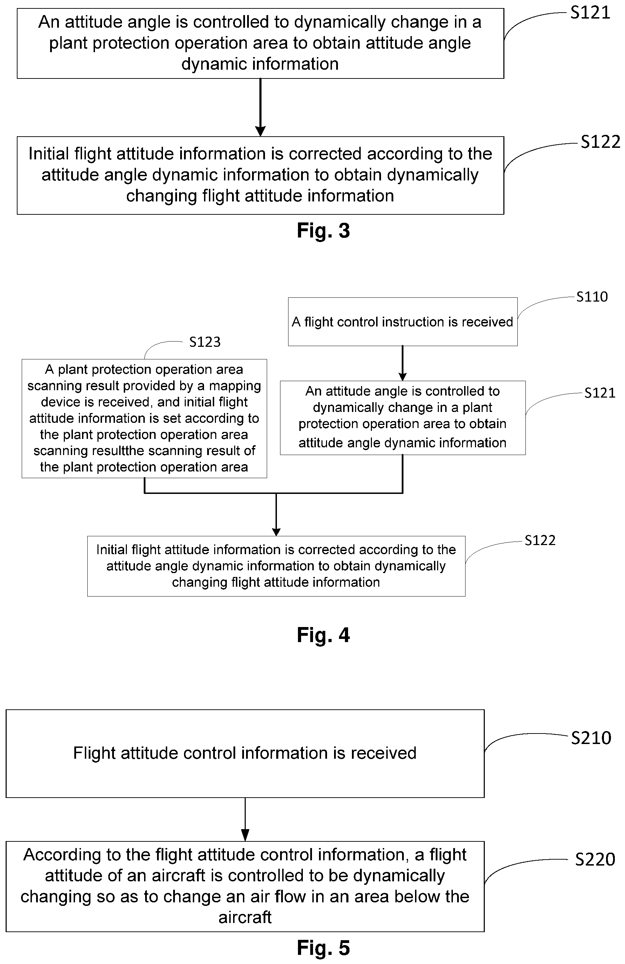

Specifically, as shown in Fig. 3, the operation that initial flight attitude information is adjusted to obtain dynamically changing flight attitude information includes the following steps.

In step S121, an attitude angle is controlled to dynamically change in a plant protection operation area to obtain attitude angle dynamic information. The attitude angle dynamic information represents an attitude angle periodic change to achieve a periodic change of flight attitude information.

In step S122, initial flight attitude information is corrected according to the attitude angle dynamic information to obtain dynamically changing flight attitude information.

The attitude angle includes a pitch angle θ, a roll angle ϕ, and a yaw angle ψ. The roll angle ϕ is defined as an angle between a plane of symmetry of an aircraft and a vertical plane passing through the longitudinal axis of an airframe, and the right roll is positive. The pitch angle θ is defined as an angle between the fuselage axis and the ground plane (horizontal plane), and the rising of the aircraft is positive. The yaw angle ψ is defined as an angle between a projection of the fuselage axis on the horizontal plane and the ground axis, the right skewing of the nose is positive.

Considering that the flight attitude dynamic change of the aircraft is to disturb the air flow, so that the air flow drives the spraying of the agent to various parts of each crop. When the pitch angle θ or the roll angle ϕ is dynamically changing, the air flow in the plant protection agent spraying area may be disturbed, so that the air flow in the plant protection agent spraying area is in a state of up and down convection, so that not only the agent can be driven to the crop, but also the formed air flow in up and down convection can drive the crop to swing, thereby making it easier to spray the agent to various parts of the crop. Therefore, the attitude angle is controlled to dynamically change in the plant protection operation area, the dynamic change of the pitch angle in the plant protection operation area or the dynamic change of the roll angle in the plant protection operation area may be controlled, or the dynamic change of the roll angle in the plant protection operation area and the dynamic change of the pitch angle in the plant protection operation area may be alternately controlled.

Specifically, in the embodiment of the present disclosure, the operation that an attitude angle is controlled to dynamically change in a plant protection operation area to obtain attitude angle dynamic information includes one of the following three modes.

In the first mode, a pitch angle is controlled to dynamically change in a plant protection operation area to obtain pitch angle dynamic information.

In the second mode, a roll angle is controlled to dynamically change in a plant protection operation area to obtain roll angle dynamic information.

In the third mode, the plant protection operation area includes at least one first operation area and at least one second operation area, a pitch angle is controlled to dynamically change in each of the first operation areas to obtain pitch angle dynamic information, and a roll angle is controlled to dynamically change in each of the second operation areas to obtain roll angle dynamic information.

It can be understood that, in the embodiment of the present disclosure, whether it is a pitch angle or a roll angle, when it is periodically changing, the waveform may present a waveform such as a sine wave, a cosine wave, or a square wave in the time dimension. Of course, it may also be another waveform. Specifically it is set according to the purpose of disturbing the air flow.

For example, in order to control the disturbed air flow to present wavy flowing so that the plant protection agent can be uniformly attached to various parts of the crop, the pitch angle or the roll angle should be controlled to make the waveform present a sine wave or a cosine wave in the time dimension when it is periodically changing.

When a pitch angle waveform represented by the pitch angle dynamic information presents a sine wave in the time dimension, a pitch angle represented by the pitch angle dynamic information is θ=asin(2πth₁), a is a pitch amplitude, h₁ is a pitch period, and t is an operation time.

When a roll angle waveform represented by the roll angle dynamic information presents a sine wave in the time dimension, a roll angle represented by the roll angle dynamic information is ϕ=bsin(2πth₂), b is a roll amplitude, h₂ is a roll angle change period, and t is an operation time.

When a pitch angle waveform represented by the pitch angle dynamic information presents a cosine wave in the time dimension, a pitch angle represented by the pitch angle dynamic information is θ=acos(2πth₁), a is a pitch amplitude, h₁ is a pitch period, and t is an operation time.

When a roll angle waveform represented by the roll angle dynamic information presents a cosine wave in the time dimension, a roll angle represented by the roll angle dynamic information is ϕ=bcos(2πth₂), b is a roll amplitude, h₂ is a roll angle change period, and t is an operation time.

If it is necessary to control the disturbed air flow to present abrupt up and down convection so that the plant protection agent is mainly sprayed on the surface of the crop relative to the aircraft, or away from the surface of the aircraft, the pitch angle or the roll angle should be controlled to make the waveform present a square wave in the time dimension when it is periodically changing.

For example, when a pitch angle waveform represented by the pitch angle dynamic information presents a square wave in the time dimension, a pitch angle represented by the pitch angle dynamic information is θ=aSgn(sin(2πth₁)) or θ=aSgn(cos(2πth₁)), a is a pitch amplitude, h₁ is a pitch period, and t is an operation time.

When a roll angle waveform represented by the roll angle dynamic information presents a square wave in the time dimension, a roll angle represented by the roll angle dynamic information is ϕ=bSgn(sin(2πth₂)) or ϕ=bSgn(cos(2πth₂)), b is a roll amplitude, h₂ is a roll angle change period, and t is an operation time.

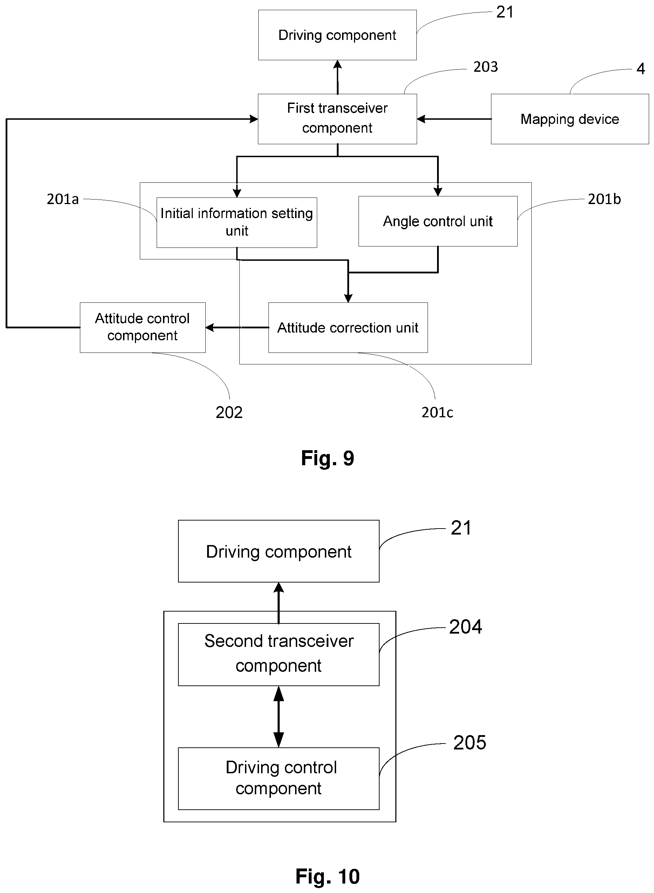

Optionally, as shown in Fig. 4 and Fig. 9, in the embodiment of the present disclosure, before correcting initial flight attitude information according to the attitude angle dynamic information, the operation that a plant protection flight attitude is adjusted to obtain dynamically changing flight attitude information further includes the following steps.

In step S123 parallel with step S121, a plant protection operation area scanning result provided by a mapping device 4 is received, and initial flight attitude information is set according to the scanning result of the plant protection operation area. The initial flight attitude information may ensure that the aircraft is in a stable flight state during the non-plant protection operation.

It is to be noted that, as shown in Fig. 4, before the initial flight attitude information is adjusted, the method for controlling flight attitude provided by the embodiment of the present disclosure further includes the following steps.

In step S110, a flight control instruction is received. The flight control instruction may be a signal to start attitude angle control, or may be control information containing an attitude angle control strategy.

When the flight control instruction is a signal for starting attitude angle control, the client 1 shown in Fig. 1, such as a handle or other signal devices, is generally used at this time to send the flight control instruction, and the flight control instruction is used as an attitude angle control command.

When the flight control instruction contains control information of an attitude angle control strategy, the user generally controls the attitude angle manually at this time. Specifically, the client 2 shown in Fig. 1, such as a joystick or other signal devices, may be used to send the flight control instruction to control how the attitude angle changes.

Based on this, in the embodiment of the present disclosure, the operation that an attitude angle is controlled to dynamically change in a plant protection operation area to obtain attitude angle dynamic information includes the following step.

According to the flight control instruction, an attitude angle is controlled to dynamically change in a plant protection operation area to obtain attitude angle dynamic information.

### Embodiment 2

As shown in Fig. 5, the embodiment of the present disclosure provides a method for controlling flight attitude. The method for controlling flight attitude includes the following steps.

In step S210, flight attitude control information is received.

In step S220, according to the flight attitude control information, a flight attitude of an aircraft is controlled to be dynamically changing so as to change an air flow in an area below the aircraft.

Compared with the conventional art, the beneficial effects of the method for controlling flight attitude provided by the embodiment of the present disclosure are the same as those of the method for controlling flight attitude provided by Embodiment 1, and will not be described herein.

It can be understood that the flight attitude control information in the embodiment of the present disclosure is variable in the time dimension, so that the purpose of controlling the flight attitude of the aircraft to be dynamically changing can be achieved.

For example, the flight attitude control information is attitude angle dynamic information. As shown in Fig. 6, the operation that a flight attitude of an aircraft is controlled to be dynamically changing according to the flight attitude control information includes the following steps.

In step S221, dynamically changing driving control information is obtained according to the attitude angle dynamic information, the dynamically changing driving control information being used for controlling a flight attitude of an aircraft to change dynamically.

It can be understood that after a flight attitude of an aircraft is controlled to be dynamically changing according to the flight attitude control information, as shown in Fig. 6 and Fig. 10, the method for controlling flight attitude provided by the embodiment of the present disclosure further includes the following steps.

In step S222, the dynamically changing driving control information is sent to a driving component 21 of the aircraft, so that the driving component 21 controls the flight attitude of the aircraft to be dynamically changing according to the dynamically changing driving control information.

It is to be noted that, for the change law of the attitude angle represented by the attitude angle dynamic information and the specific limitation of the attitude angle dynamic information, reference may be made to the corresponding description in Embodiment 1, which is not listed here one by one.

### Embodiment 3

As shown in Fig. 2 and Fig. 7, the embodiment of the present disclosure also provides a flight attitude control apparatus 20. The flight attitude control apparatus 20 includes an attitude adjustment component 201 and an information control component 202 connected to the attitude adjustment component 201.

The attitude adjustment component 201 is configured to adjust initial flight attitude information to obtain dynamically changing flight attitude information.

The information control component 202 is configured to obtain flight attitude control information according to the dynamically changing flight attitude information, the flight attitude control information being used for controlling a flight attitude of an aircraft to change dynamically so as to change an air flow in an area below the aircraft.

In specific implementation, the device for controlling flight attitude provided by the embodiment of the present disclosure performs flight attitude control according to the method for controlling flight attitude provided by Embodiment 2.

Compared with the conventional art, the beneficial effects of the flight attitude control apparatus provided by the embodiment of the present disclosure are the same as those of the method for controlling flight attitude provided by Embodiment 1, and will not be described herein.

Specifically, as shown in Fig. 3 and Fig. 9, the attitude adjustment component 201 in the embodiment of the present disclosure includes an angle control unit 201 b, configured to control an attitude angle to dynamically change in a plant protection operation area to obtain attitude angle dynamic information.

The angle control unit 201b is configured to control a pitch angle to dynamically change in a plant protection operation area to obtain pitch angle dynamic information; or, control a roll angle to dynamically change in a plant protection operation area to obtain roll angle dynamic information; or, control, if the plant protection operation area includes at least one first operation area and at least one second operation area, a pitch angle to dynamically change in each of the first operation areas to obtain pitch angle dynamic information, and control a roll angle to dynamically change in each of the second operation areas to obtain roll angle dynamic information.

Exemplarily, when a pitch angle waveform represented by the pitch angle dynamic information presents a sine wave in the time dimension, a pitch angle represented by the pitch angle dynamic information is α=asin(2πth₁), a is a pitch amplitude, h₁ is a pitch period, and t is an operation time.

When a roll angle waveform represented by the roll angle dynamic information presents a sine wave in the time dimension, a roll angle represented by the roll angle dynamic information is β=bsin(2πth₂), b is a roll amplitude, h₂ is a roll angle change period, and t is an operation time.

When a pitch angle waveform represented by the pitch angle dynamic information presents a cosine wave in the time dimension, a pitch angle represented by the pitch angle dynamic information is α=acos(2πth₁), a is a pitch amplitude, h₁ is a pitch period, and t is an operation time.

When a roll angle waveform represented by the roll angle dynamic information presents a cosine wave in the time dimension, a roll angle represented by the roll angle dynamic information is β=bcos(2πth₂), b is a roll amplitude, h₂ is a roll angle change period, and t is an operation time.

When a pitch angle waveform represented by the pitch angle dynamic information presents a square wave in the time dimension, a pitch angle represented by the pitch angle dynamic information is α=aSgn(sin(2πth₁)), a is a pitch amplitude, h₁ is a pitch period, and t is an operation time.

When a roll angle waveform represented by the roll angle dynamic information presents a square wave in the time dimension, a roll angle represented by the roll angle dynamic information is β=bSgn(sin(2πth₂)), b is a roll amplitude, h₂ is a roll angle change period, and t is an operation time.

When a pitch angle waveform represented by the pitch angle dynamic information presents a square wave in the time dimension, a pitch angle represented by the pitch angle dynamic information is α=aSgn(cos(2πth₁)), a is a pitch amplitude, h₁ is a pitch period, and t is an operation time.

When a roll angle waveform represented by the roll angle dynamic information presents a square wave in the time dimension, a roll angle represented by the roll angle dynamic information is β=bSgn(cos(2πth₂)), b is a roll amplitude, h₂ is a roll angle change period, and t is an operation time.

As shown in Fig. 4 and Fig. 8, the attitude adjustment component 201 in the embodiment of the present disclosure further includes: an attitude correction unit 201c connected to the angle control unit 201b and the information control component 202, configured to correct initial flight attitude information according to the attitude angle dynamic information to obtain dynamically changing flight attitude information.

It can be understood that as shown in Fig. 4 and Fig. 9, an embodiment of the present disclosure further includes a first transceiver component 203 connected to the information control component 202, configured to receive a plant protection operation area scanning result provided by the mapping device 4, and send flight attitude control information to the driving component 21, so that the driving component 21 controls the dynamic change of the flight attitude of the aircraft according to the flight attitude control information. When the driving component 21 drives the aircraft to fly, the aircraft may fly in a progressive scanning mode, or may fly in other ways. The specific route is set according to the actual situation.

An initial information setting unit 201a connected to the first transceiver component 203 and the attitude correction unit 201c is configured to set initial flight attitude information according to the scanning result of the plant protection operation area.

It is to be noted that in the embodiment of the present disclosure, the first transceiver component 203 is also connected to the angle control unit 201b, so that the first transceiver component 203 is further configured to receive a flight control instruction. The angle control unit 201b is configured to control, according to the flight control instruction, the attitude angle to dynamically change in the plant protection operation area to obtain attitude angle dynamic information. The flight control instruction may be an open command to start attitude angle control, or may be control information containing an attitude angle control strategy.

### Embodiment 4

As shown in Fig. 5 and Fig. 10, the embodiment of the present disclosure provides a flight attitude control apparatus. The flight attitude control apparatus includes a second transceiver component 204 and a driving control component 205 connected to the second transceiver component 204.

The second transceiver component 204 is configured to receive flight attitude control information.

The driving control component 205 is configured to control, according to the flight attitude control information, a flight attitude of an aircraft to be dynamically changing so as to change an air flow in an area below the aircraft.

In specific implementation, the device for controlling flight attitude provided by the embodiment of the present disclosure is performed according to the method for controlling flight attitude provided by Embodiment 2 to implement flight attitude control.

When the flight attitude control information is attitude angle dynamic information, as shown in Fig. 6 and Fig. 10, the driving control component 205 in the embodiment of the present disclosure is configured to obtain dynamically changing driving control information according to the attitude angle dynamic information. The dynamically changing driving control information is used for controlling a flight attitude of an aircraft to be dynamically changing.

The second transceiver component 204 in the embodiment of the present disclosure is further configured to send the dynamically changing driving control information to a driving component 21 of the aircraft, so that the driving component 21 controls the flight attitude of the aircraft to be dynamically changing according to the dynamically changing driving control information.

As for the change and limitation of the attitude angle represented by the attitude angle dynamic information, reference may be made to the corresponding part of Embodiment 1 for details, which are not listed here one by one.

### Embodiment 5

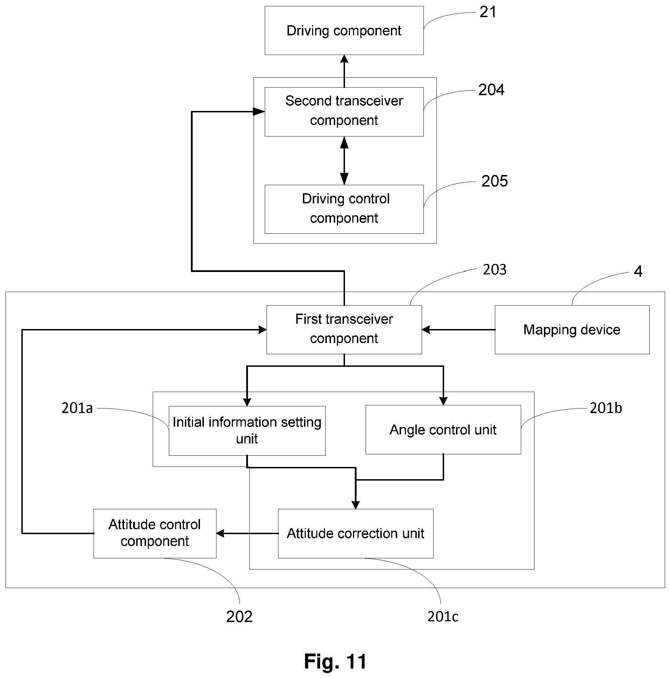

As shown in Fig. 11, the embodiment of the present disclosure also provides a flight control system. The flight control system includes the flight attitude control apparatus provided by Embodiment 3 and the flight attitude control apparatus provided by Embodiment 4. The information control component 202 is connected to the second transceiver component 204.

In specific implementation, the information control component 202 sends flight attitude control information to the second transceiver component 204. After receiving the flight attitude control information, the second transceiver component 204 controls, according to the flight attitude control information, a flight attitude of an aircraft to be dynamically changing so as to change an air flow in an area below the aircraft.

Compared with the conventional art, the beneficial effects of the flight control system provided by the embodiment of the present disclosure are the same as those of the flight attitude control apparatus provided by the above embodiment, and will not be described herein.

It can be understood that when the flight attitude of the aircraft is controlled to be dynamically changing, it is specifically performed by a driving component such as a motor. Based on this, as shown in Fig. 11, the flight control system provided by the embodiment of the present disclosure further includes a driving component 21, and the second transceiver component 204 is connected to the driving component 21 so as to ensure that the driving control component 205 controls, by the second transceiver component 204, the driving component 21 to control the flight attitude of the aircraft to be dynamically changing.

In addition, as shown in Fig. 11, when the flight attitude control apparatus provided by Embodiment 1 of the present disclosure includes a first transceiver component 203, the first transceiver component 203 is also connected to the mapping device 4, so as to ensure that the first transceiver component 203 can receive a plant protection operation area scanning result provided by the mapping device 4, so that the initial information setting unit sets initial flight attitude information according to the scanning result of the plant protection operation area. Meanwhile, the first transceiver component 203 is also connected to the second transceiver component 204, so that the second transceiver component 204 sends the flight attitude control information to the second transceiver component 204. Therefore, the flight attitude control apparatus provided by Embodiment 4 starts to perform the method for controlling flight attitude provided by Embodiment 2.

Optionally, as shown in Fig. 1 and Fig. 11, in the embodiment of the present disclosure, when the first transceiver component 203 is further configured to receive a flight control instruction, the first transceiver component 203 is further connected to a client, and the client is configured to send the flight control instruction to ensure that the angle control unit controls the dynamic change of the attitude angle in the plant protection operation area according to the flight control instruction to obtain attitude angle dynamic information.

An embodiment of the present disclosure further provides a storage medium, which is configured to store an executable program code that supports the implementation of the method for controlling flight attitude provided by Embodiment 1 and/or Embodiment 2, and the beneficial effects are the same as the beneficial effects of the method for controlling flight attitude provided by Embodiment 1, and will not be described herein.

As shown in Fig. 5 to Fig. 8, an embodiment of the present disclosure further provides a plant protection flight attitude control terminal. The plant protection flight attitude control terminal includes a transceiver 303, a memory 301, and a processor 302. The transceiver 303, the memory 301 and the processor 302 communicate with each other through a bus 304..

The memory 301 is configured to store multiple instructions to implement the method for controlling flight attitude provided by the present disclosure. The processor 302 executes the multiple instructions to implement the method for controlling flight attitude provided by Embodiment 1 and/or Embodiment 2. The transceiver 303 supports the processor 302 to communicate with the mapping device 4 and the driving component 21.

The processor 302 in the embodiment of the present disclosure may be a processor or a collective name of multiple processing elements. For example, the processor 302 may be a Central Processing Unit (CPU), or may be an Application Specific Integrated Circuit (ASIC), or one or more integrated circuits configured to implement the embodiments of the present disclosure, such as one or more Digital Signal Processors (DSP), or one or more Field Programmable Gate Arrays (FPGA).

The memory 301 may be a storage device or a collective name of multiple storage elements, and is configured to store an executable program code or the like. And the memory 301 may include a Random Access Memory (RAM), and may also include a non-volatile memory such as a magnetic disk memory or a flash memory.

The bus 304 may be an Industry Standard Architecture (ISA) bus, a Peripheral Component (PCI) bus, or an Extended Industry Standard Architecture (EISA) bus. The bus 304 may be divided into an address bus, a data bus, a control bus, and the like. For ease of representation, only one thick line is shown in Fig. 8, but it does not mean that there is only one bus or one type of bus.

The various embodiments in the specification are described in a progressive manner, the same or similar parts between the various embodiments may be referred to each other, and each embodiment focuses on the differences from the other embodiments. In particular, for the device embodiment, since it is basically similar to the method embodiment, the description is relatively simple, and the relevant parts can be referred to the description of the method embodiment.

Those skilled in the art can understand that all or part of the processes in the above method embodiments may be implemented by a computer program to instruct related hardware, and the program may be stored in a computer-readable storage medium. When the program is executed, the flow of each method embodiment as described above may be included. The storage medium may be a magnetic disk, an optical disk, a Read-Only Memory (ROM), or a Random Access Memory (RAM).

The above is only the specific implementation manner of the present disclosure, but the scope of protection of the present disclosure is not limited thereto. Any person skilled in the art can easily think of changes or replacements within the technical scope disclosed by the present disclosure, which should be covered by the scope of protection of the present disclosure. Therefore, the scope of protection of the present disclosure should be determined by the scope of protection of the claims.

### Industrial Applicability

The solutions provided by the embodiments of the application may be applied to aircraft control. In the embodiments of the application, initial flight attitude information of an aircraft is adjusted to obtain dynamically changing flight attitude information. Flight attitude control information is obtained according to the dynamically changing flight attitude information, the flight attitude control information being used for controlling a flight attitude dynamic change of the aircraft so as to change an air flow in an area below the aircraft. A propeller or rotor of the aircraft can disturb the air flow in the area below the aircraft, so that the disturbed air flow drives a plant protection agent sprayed by the aircraft to be dispersed in all directions, thereby ensuring that the agent sprayed by the aircraft can be attached to various positions of a crop, which solves the problem that it is difficult for the plant protection agent to be sprayed onto the surface of the crop facing away from the aircraft.

## Claims

1. A method for controlling flight attitude, comprising:
adjusting initial flight attitude information to obtain dynamically changing flight attitude information; and
obtaining flight attitude control information according to the dynamically changing flight attitude information, the flight attitude control information being used for controlling a flight attitude of an aircraft to change dynamically so as to change an air flow in an area below the aircraft.

2. The method for controlling flight attitude according to claim 1, wherein adjusting initial flight attitude information to obtain dynamically changing flight attitude information comprises:
controlling an attitude angle to dynamically change in a plant protection operation area to obtain attitude angle dynamic information; and
correcting initial flight attitude information according to the attitude angle dynamic information to obtain dynamically changing flight attitude information.

3. The flight attitude control method according to claim 2, wherein the attitude angle represented by the attitude angle dynamic information changes periodically.

4. The method for controlling flight attitude according to claim 2 or 3, wherein controlling the attitude angle to dynamically change in the plant protection operation area to obtain attitude angle dynamic information comprises:
controlling a pitch angle to dynamically change in the plant protection operation area to obtain pitch angle dynamic information; or,
controlling a roll angle to dynamically change in the plant protection operation area to obtain roll angle dynamic information; or,
the plant protection operation area comprising at least one first operation area and at least one second operation area, controlling a pitch angle to dynamically change in each of the first operation areas to obtain pitch angle dynamic information, and controlling a roll angle to dynamically change in each of the second operation areas to obtain roll angle dynamic information.

5. The method for controlling flight attitude according to claim 4, wherein
when a pitch angle waveform represented by the pitch angle dynamic information presents a sine wave in the time dimension, a pitch angle represented by the pitch angle dynamic information is θ=asin(2πth₁), a is a pitch amplitude, h₁ is a pitch period, and t is an operation time;
when a roll angle waveform represented by the roll angle dynamic information presents a sine wave in the time dimension, a roll angle represented by the roll angle dynamic information is ϕ=bsin(2πth₂), b is a roll amplitude, h₂ is a roll angle change period, and t is an operation time;
when a pitch angle waveform represented by the pitch angle dynamic information presents a square wave in the time dimension, a pitch angle represented by the pitch angle dynamic information is θ=aSgn(sin(2πth₁)), a is a pitch amplitude, h₁ is a pitch period, and t is an operation time; and
when a roll angle waveform represented by the roll angle dynamic information presents a square wave in the time dimension, a roll angle represented by the roll angle dynamic information is ϕ=bSgn(sin(2πth₂)), b is a roll amplitude, h₂ is a roll angle change period, and t is an operation time.

6. The method for controlling flight attitude according to claim 2, wherein adjusting, before correcting initial flight attitude information according to the attitude angle dynamic information, a plant protection flight attitude to obtain dynamically changing flight attitude information further comprises:
receiving a scanning result of the plant protection operation area, wherein the scanning result is provided by a mapping device; and,
setting the initial flight attitude information according to the scanning result of the plant protection operation area.

7. The method for controlling flight attitude according to claim 6, wherein after obtaining flight attitude control information, the plant protection flight attitude control method further comprises:
sending the flight attitude control information to a driving component of the aircraft, so that the driving component controls the flight attitude dynamic change of the aircraft according to the flight attitude control information.

8. The method for controlling flight attitude according to claim 2, wherein before adjusting initial flight attitude information, the method for controlling flight attitude further comprises:
receiving a flight control instruction;
controlling the attitude angle to dynamically change in the plant protection operation area to obtain attitude angle dynamic information comprises:
controlling, according to the flight control instruction, the attitude angle to dynamically change in the plant protection operation area to obtain attitude angle dynamic information.

9. A method for controlling flight attitude, comprising:
receiving flight attitude control information; and
controlling, according to the flight attitude control information, a flight attitude of an aircraft to be dynamically changing so as to change an air flow in an area below the aircraft.

10. The method for controlling flight attitude according to claim 9, wherein the flight attitude control information is attitude angle dynamic information;
controlling, according to the flight attitude control information, the flight attitude of the aircraft to be dynamically changing comprises:
obtaining dynamically changing driving control information according to the attitude angle dynamic information, the dynamically changing driving control information being used for controlling the flight attitude of the aircraft to change dynamically; and
sending the dynamically changing driving control information to a driving component of the aircraft, so that the driving component controls the flight attitude of the aircraft to be dynamically changing according to the dynamically changing driving control information.

11. The flight attitude control method according to claim 10, wherein the attitude angle represented by the attitude angle dynamic information changes periodically.

12. The flight attitude control method according to claim 10, wherein the attitude angle dynamic information comprises pitch angle dynamic information or roll angle dynamic information.

13. The flight attitude control methodmethod for controlling flight attitude according to claim 10, wherein the plant protection operation area comprises at least one first operation area and at least one second operation area, and the attitude angle dynamic information comprises pitch angle dynamic information for controlling the flight attitude of the aircraft in the at least one first operation area or roll angle dynamic information for controlling the flight attitude of the aircraft in the at least one second operation area.

14. The method for controlling flight attitude according to claim 12 or 13, wherein when a pitch angle waveform represented by the pitch angle dynamic information presents a sine wave in the time dimension, a pitch angle represented by the pitch angle dynamic information is θ=asin(2πth₁), a is a pitch amplitude, h₁ is a pitch period, and t is an operation time;
when a roll angle waveform represented by the roll angle dynamic information presents a sine wave in the time dimension, a roll angle represented by the roll angle dynamic information is ϕ=bsin(2πth₂), b is a roll amplitude, h₂ is a roll angle change period, and t is an operation time;
when a pitch angle waveform represented by the pitch angle dynamic information presents a square wave in the time dimension, a pitch angle represented by the pitch angle dynamic information is θ=aSgn(sin(2πth₁)), a is a pitch amplitude, h₁ is a pitch period, and t is an operation time; and
when a roll angle waveform represented by the roll angle dynamic information presents a square wave in the time dimension, a roll angle represented by the roll angle dynamic information is ϕ=bSgn(sin(2πth₂)), b is a roll amplitude, h₂ is a roll angle change period, and t is an operation time.

15. A flight attitude control apparatus, comprising:
an attitude adjustment component, configured to adjust initial flight attitude information to obtain dynamically changing flight attitude information; and
an information control component connected to the attitude adjustment component, configured to obtain flight attitude control information according to the dynamically changing flight attitude information, the flight attitude control information being used for controlling a flight attitude of an aircraft to change dynamically so as to change an air flow in an area below the aircraft.

16. The flight attitude control apparatus according to claim 15, wherein the attitude adjustment component comprises:
an angle control unit, configured to control an attitude angle to dynamically change in a plant protection operation area to obtain attitude angle dynamic information; and
an attitude correction unit connected to the angle control unit and the information control component, configured to correct initial flight attitude information according to the attitude angle dynamic information to obtain dynamically changing flight attitude information.

17. The flight attitude control apparatus according to claim 16, wherein the attitude angle represented by the attitude angle dynamic information changes periodically.

18. The flight attitude control apparatus according to claim 16, wherein the angle control unit is configured to control a pitch angle to dynamically change in a plant protection operation area to obtain pitch angle dynamic information; or,
control a roll angle to dynamically change in a plant protection operation area to obtain roll angle dynamic information; or,
control, if the plant protection operation area comprises at least one first operation area and at least one second operation area, a pitch angle to dynamically change in each of the first operation areas to obtain pitch angle dynamic information, and control a roll angle to dynamically change in each of the second operation areas to obtain roll angle dynamic information.

19. The flight attitude control apparatus according to claim 18, wherein when a pitch angle waveform represented by the pitch angle dynamic information presents a sine wave in the time dimension, a pitch angle represented by the pitch angle dynamic information is α=asin(2πth₁), a is a pitch amplitude, h₁ is a pitch period, and t is an operation time;
when a roll angle waveform represented by the roll angle dynamic information presents a sine wave in the time dimension, a roll angle represented by the roll angle dynamic information is β=bsin(2πth₂), b is a roll amplitude, h₂ is a roll angle change period, and t is an operation time;
when a pitch angle waveform represented by the pitch angle dynamic information presents a square wave in the time dimension, a pitch angle represented by the pitch angle dynamic information is α=aSgn(sin(2πth₁)), a is a pitch amplitude, h₁ is a pitch period, and t is an operation time; and
when a roll angle waveform represented by the roll angle dynamic information presents a square wave in the time dimension, a roll angle represented by the roll angle dynamic information is β=bSgn(sin(2πth₂)), b is a roll amplitude, h₂ is a roll angle change period, and t is an operation time.

20. The flight attitude control apparatus according to claim 16, wherein the attitude adjustment module further comprises:
a first transceiver module connected to the information control module, configured to receive a plant protection operation area scanning result provided by a mapping device, and send the flight attitude control information to a driving module, so that the driving module controls the flight attitude dynamic change of the aircraft according to the flight attitude control information; and
an initial information setting unit connected to the first transceiver module and the attitude correction unit, configured to set initial flight attitude information according to the plant protection operation area scanning result.

21. The flight attitude control apparatus according to claim 20, wherein the first transceiver module is connected to the angle control unit;
the first transceiver module is further configured to receive a flight control instruction; and
the angle control unit is configured to control, according to the flight control instruction, an attitude angle to dynamically change in a plant protection operation area to obtain attitude angle dynamic information.

22. A flight attitude control apparatus, comprising:
a second transceiver component, configured to receive flight attitude control information; and
a driving control component connected to the second transceiver component, configured to control, according to the flight attitude control information, a flight attitude of an aircraft to be dynamically changing so as to change an air flow in an area below the aircraft.

23. The flight attitude control apparatus according to claim 22, wherein the flight attitude control information is attitude angle dynamic information;
the driving control component is configured to obtain dynamically changing driving control information according to the attitude angle dynamic information, the dynamically changing driving control information being used for controlling a flight attitude of an aircraft to be dynamically changing; and
the second transceiver component is further configured to send the dynamically changing driving control information to a driving component of the aircraft, so that the driving component controls the flight attitude of the aircraft to be dynamically changing according to the dynamically changing driving control information.

24. The flight attitude control apparatus according to claim 23, wherein the attitude angle represented by the attitude angle dynamic information changes periodically.

25. The flight attitude control apparatus according to claim 23, wherein the attitude angle dynamic information comprises pitch angle dynamic information or roll angle dynamic information.

26. The flight attitude control apparatus according to claim 23, wherein the plant protection operation area comprises at least one first operation area and at least one second operation area, and the attitude angle dynamic information comprises pitch angle dynamic information for controlling the flight attitude of the aircraft in the at least one first operation area or roll angle dynamic information for controlling the flight attitude of the aircraft in the at least one second operation area.

27. The flight attitude control apparatus according to claim 25 or 26, wherein when a pitch angle waveform represented by the pitch angle dynamic information presents a sine wave in the time dimension, a pitch angle represented by the pitch angle dynamic information is θ=asin(2πth₁), a is a pitch amplitude, h₁ is a pitch period, and t is an operation time;
when a roll angle waveform represented by the roll angle dynamic information presents a sine wave in the time dimension, a roll angle represented by the roll angle dynamic information is ϕ=bsin(2πth₂), b is a roll amplitude, h₂ is a roll angle change period, and t is an operation time;
when a pitch angle waveform represented by the pitch angle dynamic information presents a square wave in the time dimension, a pitch angle represented by the pitch angle dynamic information is θ=aSgn(sin(2πth₁)), a is a pitch amplitude, h₁ is a pitch period, and t is an operation time; and
when a roll angle waveform represented by the roll angle dynamic information presents a square wave in the time dimension, a roll angle represented by the roll angle dynamic information is ϕ=bSgn(sin(2πth₂)), b is a roll amplitude, h₂ is a roll angle change period, and t is an operation time.

28. A flight control system, comprising the flight attitude control apparatus according to any one of claims 15 to 21 and the flight attitude control apparatus according to any one of claims 22 to 27, an information control module being connected to a second transceiver module.

29. The flight control system according to claim 28, wherein when the flight attitude control apparatus according to any one of claims 15 to 21 comprises a first transceiver module, the first transceiver module is connected to a mapping device, and the first transceiver module is further connected to the second transceiver module, the flight control system further comprising a driving module to which the second transceiver module is connected.

30. The flight control system according to claim 29, wherein the first transceiver module is further connected to a client when receiving a flight control instruction, and
the client is configured to send the flight control instruction.
